(19) Europäisches Patentamt
European Patent Office
Office européen des brevets

(11) Veröffentlichungsnummer: **0 033 089**
**A2**

# (12) EUROPÄISCHE PATENTANMELDUNG

(21) Anmeldenummer: **81100226.0**

(22) Anmeldetag: **14.01.81**

(51) Int. Cl.³: **C 08 G 63/62**
C 07 D 493/04, C 08 L 69/00

(30) Priorität: **26.01.80 DE 3002762**

(43) Veröffentlichungstag der Anmeldung:
**05.08.81 Patentblatt 81/31**

(84) Benannte Vertragsstaaten:
**DE FR GB IT NL**

(71) Anmelder: **BAYER AG**
**Zentralbereich Patente, Marken und Lizenzen**
**D-5090 Leverkusen 1, Bayerwerk(DE)**

(72) Erfinder: **Medem, Harald, Dr.**
**Buschstrasse 167**
**D-4150 Krefeld(DE)**

(72) Erfinder: **Schreckenberg, Manfred, Dr.**
**Dörperhofstrasse 15**
**D-4150 Krefeld(DE)**

(72) Erfinder: **Dhein, Rolf, Dr.**
**Deswatinesstrasse 30**
**D-4150 Krefeld(DE)**

(72) Erfinder: **Nouvertné, Werner, Dr.**
**Scheiblerstrasse 95**
**D-4150 Krefeld 1(DE)**

(72) Erfinder: **Rudolph, Hans, Dr.**
**Haydnstrasse 9**
**D-4150 Krefeld(DE)**

(54) **Heterocyclisch-aromatische Oligocarbonate, ihre Herstellung, ihre Verwendung zur Herstellung von hochmolekularen, heterocyclisch-aromatischen Copolycarbonaten, diese Copolycarbonate sowie Abmischungen dieser Copolycarbonate mit anderen Thermoplasten.**

(57) Gegenstand der vorliegenden Erfindung sind heterocyclischaromatische Oligocarbonate, ihre Herstellung, ihre Verwendung zur Herstellung von hochmolekularen, heterocyclischen aromatischen Copolycarbonaten, hochmolekulare, thermolastische, heterocyclisch-aromatische Copolycarbonate sowie Abmischungen dieser Copolycarbonate mit anderen Thermoplasten.

EP 0 033 089 A2

BAYER AKTIENGESELLSCHAFT 5090 Leverkusen, Bayerwerk
Zentralbereich
Patente, Marken und Lizenzen PS/kl-c 25. Jan. 1980

Heterocyclisch-aromatische Oligocarbonate, ihre Herstellung, ihre Verwendung zur Herstellung von hochmolekularen, heterocyclisch-aromatischen Copolycarbonaten, diese Copolycarbonate sowie Abmischungen dieser Copolycarbonate mit anderen Thermoplasten.

Gegenstand der vorliegenden Erfindung ist ein Verfahren zur Herstellung von heterocyclisch-aromatischen Oligocarbonaten mit Diphenolcarbonat-Endgruppen, das dadurch gekennzeichnet ist, daß heterocyclische Diole der Struktur (I)

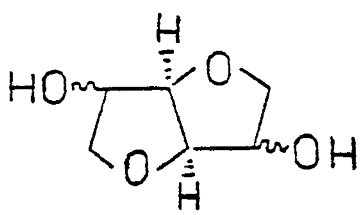

(I)

und aromatische Diphenole mit Diphenylcarbonat in einem Reaktionsschritt unter Abspaltung von Phenol zu heterocyclisch-aromatischen Oligocarbonaten umgesetzt werden.

Ein weiterer Gegenstand der Erfindung sind die erfindungsgemäß erhaltenen heterocyclisch-aromatischen Oligocarbonate mit Diphenolcarbonat-Endgruppen sowie deren Verwendung zur Herstellung von thermoplastischen, hochmolekularen, heterocyclisch-aromatischen Copolycarbonaten.

Ein weiterer Gegenstand der vorliegenden Erfindung sind die erfindungsgemäß erhaltenen hochmolekularen thermoplastischen Copolycarbonate mit einem Anteil von 0,1 - 95 Mol-%, vorzugsweise 5 - 95 Mol-% und insbesondere 50 - 90 Mol-%, bezogen auf die Gesamtmolmenge an Carbonatstruktureinheiten im Polycarbonatmolekül, an Carbonatstruktureinheiten aus Hexahydrofuro-(3,2-b)-furan-3,6-diolen gemäß Formel (II).

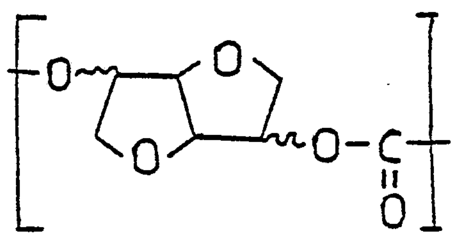

(II)

Die Herstellung von Oligocarbonaten mit Hydroxyl-Endgruppen ist prinzipiell bekannt. Gemäß DAS 1 915 908 können aliphatische Oligocarbonate mit Hydroxyl-Endgruppen durch Umsetzung aliphatischer Diole mit Diphenylcarbonat nach dem Umesterungsverfahren hergestellt werden. Gemäß der deutschen Patentanmeldung P 28 27 325.8 (Le A 18 819) werden aliphatisch-aromatische Oligocarbonate mit Diphenolcarbonat-Endgruppen hergestellt, indem aliphatische Diole, Kohlensäurebisarylester (z.B.

Diphenylcarbonat) und Diphenole gemeinsam nach dem Umesterungsverfahren umgesetzt werden. Bei diesem Verfahren entstehen bei der gemeinsamen Kondensation nicht unregelmäßige Polycarbonatgemische mit aliphatischen und aromatischen OH-Endgruppen, sondern es erfolgt zunächst eine selektive Kondensation des aliphatischen Diols. Erst am Ende der Reaktion greift das Diphenol ein und wird mit den Kettenenden des Oligocarbonats verknüpft, so daß die aromatischen OH-Endgruppen vorliegen. Es war keineswegs vorauszusehen, daß in gleicher Weise die heterocyclischen Diole der Formel (I), die nur über sekundäre OH-Gruppen verfügen, mit Diphenolen und Diphenylcarbonaten entsprechend umgesetzt werden können.

Gegenstand der vorliegenden Erfindung ist ein Verfahren zur Herstellung von heterocyclisch-aromatischen Oligocarbonaten mit Diphenolcarbonat-Endgruppen, das dadurch gekennzeichnet ist, daß heterocyclische Diole der Formel (I), Kohlensäurebisarylester (z.B. Diphenylcarbonat) und Diphenole (z.B. Bisphenol A) gemeinsam, gegebenenfalls unter Mitverwendung von Katalysatoren, bei Temperaturen zwischen 100 und 280°C und im Vakuum zwischen 200 und 0,1 Torr, umgesetzt werden, wobei zur Herstellung von 1 Mol des heterocyclisch-aromatischen Oligocarbonates n Mol Diol I, m Mol Diphenol und p Mol Kohlensäurebisarylester eingesetzt werden, wobei n eine Zahl von 1 bis 80, vorzugsweise 2 bis 40, ist und wobei m eine beliebige Zahl zwischen 2 und 5 und p mindestens n + 1, höchstens aber (n + m)-1 ist.

Die erhaltenen Oligocarbonate haben beispielsweise die folgende idealisierte Formel (III)

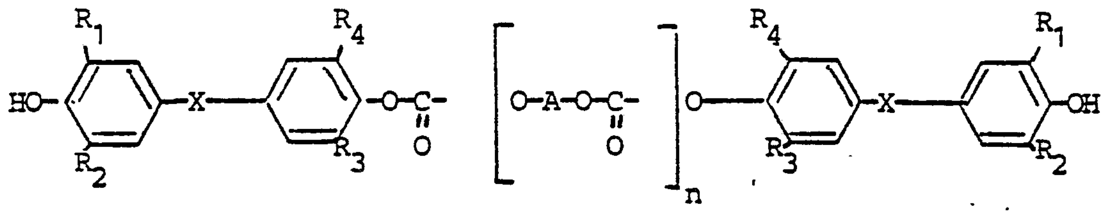

(III)

worin A der bivalente Rest eines heterocyclischen Diols der Formel (I) ist

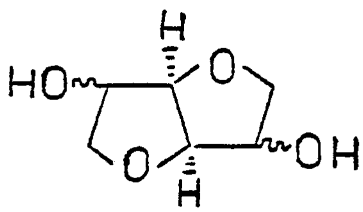

(I)

n eine Zahl von 1 bis 80, vorzugsweise 2 bis 40 bedeutet, und die Endgruppen aus den Diphenolen der Formel (IV) resultieren

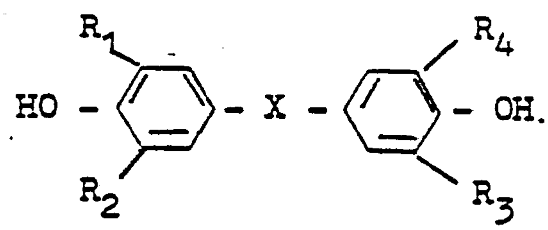

(IV)

worin

X $C_1$-$C_6$-Alkylen, $C_2$-$C_6$-Alkyliden, $C_6$-$C_{10}$-Cycloalkylen, $C_6$-$C_{10}$-Cycloalkyliden, $-\underset{|}{C}H$-Aryl wie $-\underset{|}{C}H-C_6H_5$, $-\underset{|}{C}(Aryl)_2$ wie $-\underset{|}{C}(C_6H_5)_2$, $-\underset{\overset{\parallel}{O}}{C}-$, -S-, -SO-, $-SO_2-$, -O-,

eine direkte Bindung und 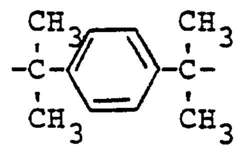 ,

$R_1$ bis $R_4$ gleich oder verschieden sind und H, $CH_3$, $C_2H_5$, $O-CH_3$, Cl oder Br bedeuten.

Geeignete Katalysatoren für die erfindungsgemäße Herstellung der heterocyclisch-aromatischen Oligocarbonate sind:

a) Basen wie Oxide, Hydroxide, Carbonate, Phosphite, Alkoholate, Phenolate oder Carboxylate von Alkali- oder Erdalkalimetallen oder tertiäre Amine und

b) Übergangsmetallverbindungen wie Titansäuretetraalkylester, Dialkylzinnverbindungen, Carboxylate von Pb, Co, Ni, Fe und Oxide von Sb, As.

Der Katalysator wird in Mengen zwischen 0,0001 und 1 Gew.-%, vorzugsweise 0,001 und 0,1 Gew.-%, bezogen auf das Gesamtgewicht des eingesetzten Reaktionsgemisches, verwendet.

Das erfindungsgemäße Verfahren ist dadurch gekennzeichnet, daß die Polykondensation der heterocyclischen Diole und aromatischen Diphenole mit Kohlensäurebisarylestern bei Temperaturen zwischen 100 und 280°C, vorzugsweise

120 und 250°C und im Vakuum zwischen 200 Torr und 0,1 Torr durchgeführt wird, bis ca. 99,9 % des bei der Reaktion freiwerdenden Phenols abdestilliert sind. Die Reaktionszeit für das beschriebene Umesterungsverfahren zur Herstellung der heterocyclisch-aromatischen Oligocarbonate beträgt in Abhängigkeit von Reaktionstemperatur, Druck sowie Art und Menge des Katalysators zwischen 1 und 50 Stunden. Die Umesterung erfolgt vorzugsweise in Abwesenheit von Lösungsmitteln.

Mit Hilfe der $TiCl_4$-Methode, die z.B. in Makr. Chem. 88, S. 221 ff (1965) beschrieben wird, kann der Gehalt an phenolischen OH-Endgruppen bestimmt werden. Damit kann überprüft werden, ob am Kettenende der heterocyclisch-aromatischen Oligocarbonate ausschließlich die eingesetzten Diphenole stehen. Bei der Bestimmung der OH-Zahl durch Acylierung mit Acetanhydrid in Pyridin und Rücktitration der entstandenen Essigsäure und des Anhydridüberschusses mit NaOH werden sowohl aliphatische als auch phenolische Hydroxylgruppen erfaßt. Durch die Bestimmung der OH-Zahl werden die in den unten beschriebenen Beispielen aufgeführten Molekulargewichte $M_n$ (Zahlenmittel) ermittelt.

Für das beschriebene Verfahren geeignete Kohlensäurebisarylester sind insbesondere die der Formel (V)

$$Ar-O-\underset{\underset{O}{\|}}{C}-O-Ar \qquad (V)$$

worin Ar ein substituierter oder unsubstituierter Arylrest mit 6 bis 18 C-Atomen ist.

Beispiele dafür sind Diphenylcarbonat, alkylsubstituierte Diphenylcarbonate wie die Di-tolylcarbonate, halogensubstituierte Diphenylcarbonate, wie die Dichlorphenylcarbonate, nitrosubstituierte Diphenylcarbonate und Dinaphthylcarbonat.

Für die erfindungsgemäße Herstellung der Oligocarbonate (III) mit Diphenolcarbonat-Endgruppen geeignete heterocyclische Diole der Formel (I) sind

(3aR)-(3ar,6ac)-Hexahydro-furo-(3,2-b)-furan-3c,6t-diol, 1,4;3,6-Dianhydro-D-glucit, Ia,

(3aR)-(3ar,6ac)-Hexahydro-furo-(3,2-b)-furan-3t,6t-diol, 1,4;3,6-Dianhydro-D-mannit, Ib,

(3aS)-(3ar,6ac)-Hexahydro-furo-(3,2-b)-furan-3c,6c-diol, 1,4;3,6-Dianhydro-D-idit, Ic,

(3aR)-(3ar,6ac)-Hexahydro-furo-(3,2-b)-furan-3c,6c-diol, 1,4;3,6-Dianhydro-L-idit, Id.

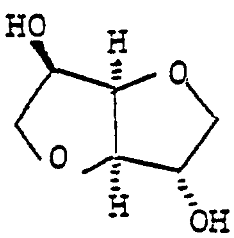

Ia

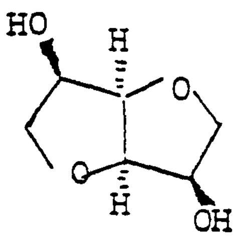

Ib

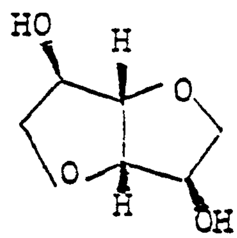

Ic

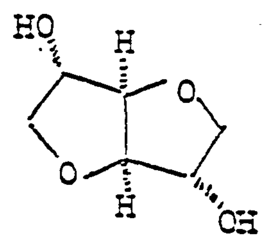

Id

Erfindungsgemäß besonders bevorzugt ist das Diol der Formel I a.

Die erfindungsgemäß verwendbaren Diole sind literaturbekannt und in einfacher Weise, zumeist durch Behandlung mit Säuren, aus den entsprechenden Hexiten zugänglich. Mehrere Methoden für ihre Darstellung werden in "Beilsteins Handbuch der org. Chemie", 3. und 4. Ergänzungswerk, Band 19/2, S. 989 ff, zitiert.

Die zur Herstellung der Oligocarbonate (III) weiterhin benötigten aromatischen Diphenole besitzen die Formel (IV),

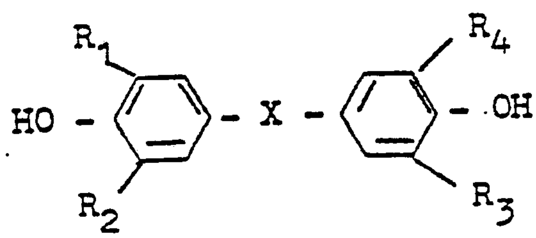

(IV)

worin

X $C_1$-$C_6$-Alkylen, $C_2$-$C_6$-Alkyliden, $C_6$-$C_{10}$-Cycloalkylen, $C_6$-$C_{10}$-Cycloalkyliden, -CH-Aryl wie $-CH-C_6H_5$, -C(Aryl)$_2$ wie $-C(C_6H_5)_2$, $-\underset{O}{\underset{\|}{C}}-$, -S-, -SO-, $-SO_2-$, -O-, eine direkte Bindung und 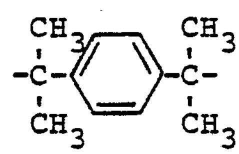 ,

$R_1$ bis $R_4$ gleich oder verschieden sind und H, $CH_3$, $C_2H_5$, $O-CH_3$, Cl oder Br bedeuten.

Erfindungsgemäß geeignete Diphenole sind beispielsweise

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
$\alpha,\alpha'$-Bis-(hydroxyphenyl)-diisopropylbenzole

sowie deren kernalkylierte und kernhalogenierte Verbindungen. Diese und weitere geeignete Diphenole sind z.B. in den US-Patentschriften 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, 2 211 957, der FR-PS 1 561 518 und in der Monographie "H. Schnell, Chemistry and Physics of Polycarbonates, Interscience Publishers, New York, 1964", beschrieben.

Bevorzugte Diphenole sind z.B.:

2,2-Bis-(4-hydroxyphenyl)-propan, Bisphenol A
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
Bis-(4-hydroxyphenyl)-methan
2,4-Bis-(4-hydroxyphenyl)-2-methylbutan

1,1-Bis-(4-hydroxyphenyl)-cyclohexan
α,α'-Bis-(4-hydroxyphenyl)-p-diisopropylbenzol
Bis-(4-hydroxyphenyl)-sulfid
Bis-(4-hydroxyphenyl)-sulfon
4,4'-Dihydroxydiphenyl

Besonders bevorzugte Diphenole sind z.B.:

2,2-Bis-(4-hydroxyphenyl)-propan, (Bisphenol A)
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan
Bis-(4-hydroxyphenyl)-sulfid.

Es können auch beliebige Mischungen dieser Diphenole eingesetzt werden. In der Formel (III) bedeutet n eine ganze Zahl von 1 bis 80, vorzugsweise von 2 bis 40.

Erfindungsgemäße heterocyclisch-aromatische Oligocarbonate mit Diphenolcarbonat-Endgruppen sind somit z.B. die der idealisierten Formeln III-1 bis III-7

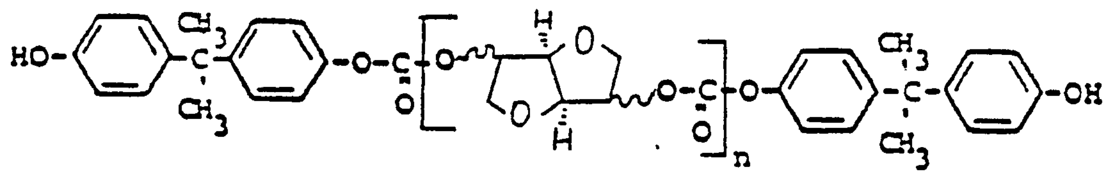

III-1

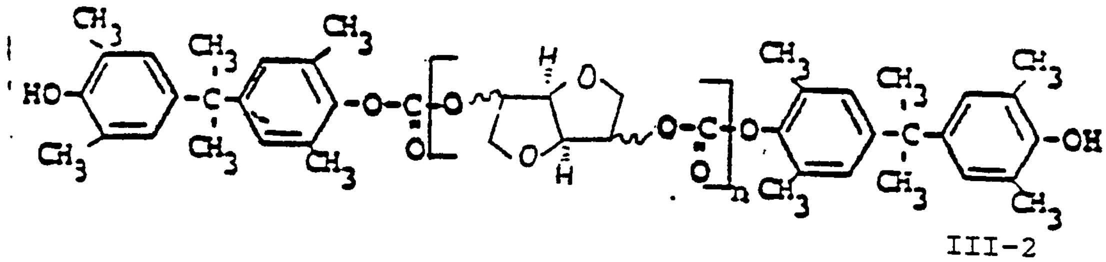

III-2

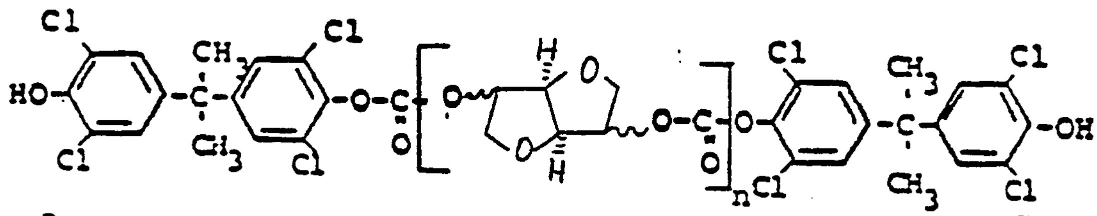

III-3

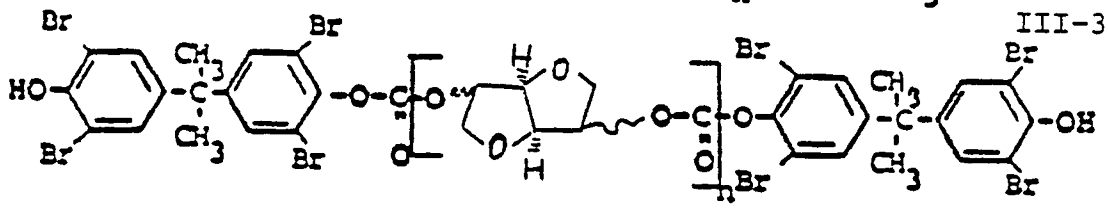

III-4

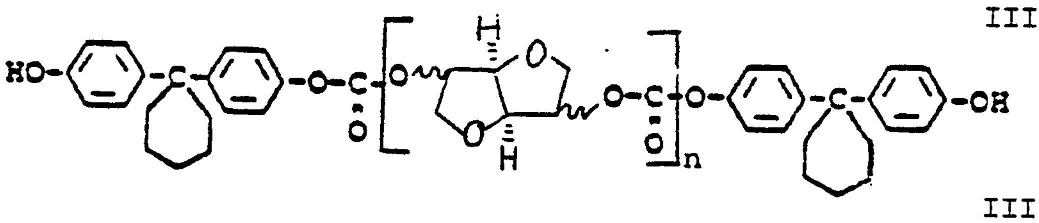

III-5

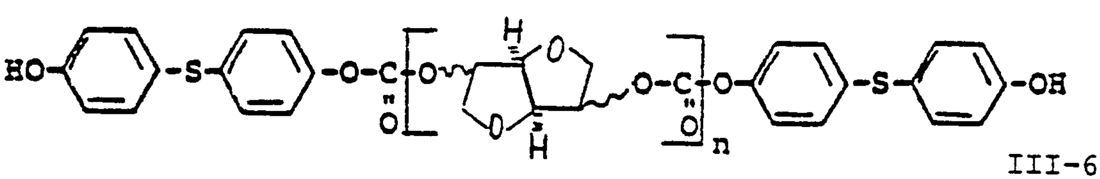

III-6

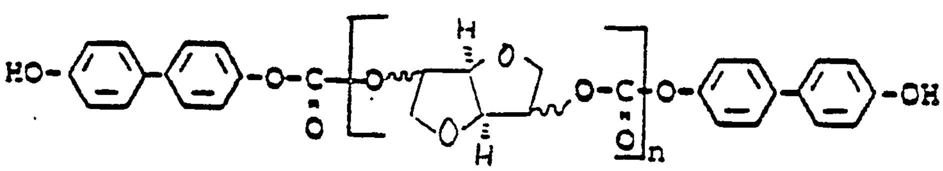

III-7

Besonders bevorzugt sind heterocyclisch-aromatische Oligocarbonate der idealisierten Formel III-1a

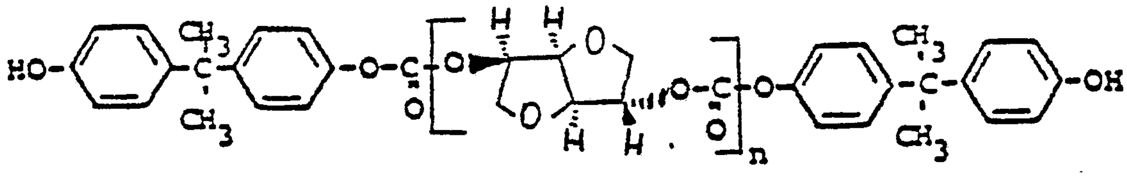

III-1a

worin n eine Zahl von 2 bis 40 bedeutet.

Die erfindungsgemäßen heterocyclisch-aromatischen Oligocarbonate mit Diphenolcarbonat-Endgruppen können durch Umsetzung mit Diisocyanaten oder aliphatischen und/oder aromatischen Dicarbonsäurederivaten in Polyurethane oder Polyester eingebaut werden. Insbesondere geeignet sind die erfindungsgemäßen Oligocarbonate als Ausgangsbisphenole bei der Herstellung von Copolycarbonaten nach dem bekannten Zweiphasengrenzflächenverfahren. Man erhält so hochmolekulare heterocyclisch-aromatische Copolycarbonate mit Diphenol-carbonat-Blöcken und Hexahydro-furo-(3,2-b)-furan-diol-carbonat-Blöcken.

Polycarbonate aus Diphenolen sind seit langem bekannt. Sie verfügen über eine Reihe wertvoller Eigenschaften, die sie zu einem für Industrie und Technik unentbehrlichen Werkstoff machen. Der Einbau von Hexahydro-furo-(3,2-b)-furan-3,6-diolen der Struktur (I),

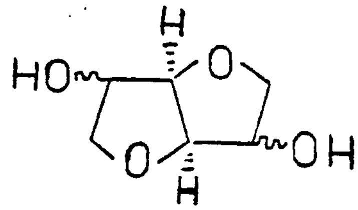

(I)

die in einfacher Weise durch Dehydratisierung von Hexiten zugänglich sind, in thermoplastische Polycarbonate ist von hoher wirtschaftlicher Bedeutung. Seit jeher besteht für die Chemie ein Interesse, Rohstoffe aus begrenzten Naturvorräten durch Rohstoffe aus beliebig vermehrbaren Naturvorkommen pflanzlichen Ursprungs zu ersetzen. So ist beispielsweise der Ersatz von Erdöl und der daraus erhältlichen Diphenole durch Stärke und daraus erhältliche Oligosaccharide, Hexite etc. von wirtschaftlichem Interesse. Beispielsweise steht Sorbit im Gegensatz zu Diphenolen in größeren Mengen zur Verfügung.

Aus der GB-PS 1 079 686 ist bekannt, daß aus den heterocyclischen Diolen der Struktur (I) hochmolekulare Polyester und Polycarbonate hergestellt werden können. Diese Produkte, namentlich die Polycarbonate, können jedoch noch keine technische Anwendung finden. Ursache ist das unbefriedigende Eigenschaftsbild. So erhält man nach dem Beispiel 5 der GB-PS 1 079 686 zwar ein hochmolekulares Polycarbonat des 1.4;3.6-Dianhydro-D-glucit, das jedoch höherschmelzende, vernetzte Anteile enthält und aufgrund dieser inhomogenen Erscheinung nur mäßige mechanische Eigenschaften besitzt. Bei Verwendung von 1.4;3.6-Dianhydro-D-mannit erhält man nach diesem Verfahren nur pulverige, kristalline Massen.

Ein bekanntes Verfahren zur Herstellung von Polycarbonaten ist die Methode der Schmelzumesterung. Um hochmolekulare Polycarbonate nach der Methode der Schmelzumesterung zu erhalten, müssen möglichst äquimolare Mengen an OH-Äquivalenten resultierend aus Diolen und Diphenolen und Arylcarbonat- bzw. Alkylcarbonat-Äquivalenten resultierend aus den jeweils eingesetzten Carbonatspendern verwendet und bei Reaktionstemperaturen von zuletzt über 300°C umgeestert werden. Bei der Mitverwendung der heterocyclischen Diole der Struktur (I) treten jedoch bei den erforderlichen Verweilzeiten unter diesen Bedingungen unter $CO_2$-Abspaltung Verzweigungen auf, wodurch inhomogene Produkte entstehen.

Zum Einbau der heterocyclischen, auf Naturstoffen basierenden Diole I in hochmolekulare, thermoplastische Copolycarbonate ist die Methode der Schmelzumesterung daher nicht geeignet.

Ein bevorzugtes Verfahren zur Herstellung von aromatischen Polycarbonaten ist das Phasengrenzflächenverfahren, siehe beispielsweise H. Schnell, Chemistry and Physics of Polycarbonates, Interscience Publishers, 1964, Seiten 33 ff, Seiten 9 - 14. Hierbei werden ein oder mehrere Bisphenole in wäßrig-alkalischer Lösung unter intensivem Rühren mit inerten Lösungsmitteln, wie z.B. chlorierten Kohlenwasserstoffen, durchmischt und unter Einleiten von Phosgen in hochmolekulare Polycarbonate überführt. Bei der Mitverwendung von heterocyclischen Diolen der Formel (I) werden jedoch keine

hochmolekularen Polycarbonate erhalten. Ursache dafür sind die unterschiedlichen Reaktivitäten der aromatischen Bisphenole und heterocyclischen Diole. Zur Herstellung von heterocyclisch-aromatischen Copolycarbonaten ist daher die Methode der Phasengrenzflächenphosgenierung nicht geeignet.

In der deutschen Patentanmeldung P 29 38 464.3 (Le A 19 901) wurde ein Verfahren beschrieben, bei dem die Furan-3,6-diole I in Form ihrer Bishalogenkohlensäureester mit aromatischen Diphenolen in einer Zweiphasengrenzflächenkondensation zur Umsetzung gebracht werden. Ein Nachteil dieser Methode besteht darin, daß keine Copolycarbonate hergestellt werden können, die mehr als 50 Mol-%, bezogen auf die Gesamtmolmenge an eingesetzten Di-hydroxyverbindungen, an Diolen der Formel (I) enthalten. Im Interesse einer weitgehenden Unabhängigkeit von den auf Erdöl basierenden Rohstoffen ist es jedoch wünschenswert, den Anteil der Diole(I) an der Gesamtmenge der eingesetzten Di-hydroxyverbindungen weiter zu erhöhen. Darüber hinaus gelingt es nicht, Copolycarbonate mit Furan-3,6-diol-Blöcken, d.h. Copolycarbonate, in denen zwei und mehr Carbonatstruktureinheiten der Formel (II)

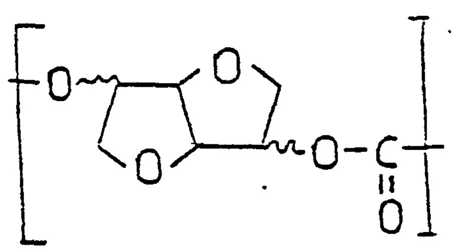

(II)

miteinander verknüpft sind, zu synthetisieren.

Es wurde nun gefunden, daß hochmolekulare heterocyclisch-aromatische Copolycarbonate, die bis zu 95 Mol-%, bezogen auf die Gesamtmolmenge an Dihydroxyverbindungen, an Diolen der Formel (I) eingebaut enthalten, hergestellt werden können, indem die zuvor beschriebenen Oligocarbonate mit Diphenolcarbonat-Endgruppen der Formel (III) nach dem Phasengrenzflächenverfahren mit Phosgen oder $COBr_2$ umgesetzt werden.

Gegenstand der vorliegenden Erfindung ist somit auch ein Verfahren zur Herstellung von hochmolekularen heterocyclisch-aromatischen Copolycarbonaten, dadurch gekennzeichnet, daß man heterocyclisch-aromatische Oligocarbonate mit Diphenolcarbonat-Endgruppen, insbesondere die der Formel (III)

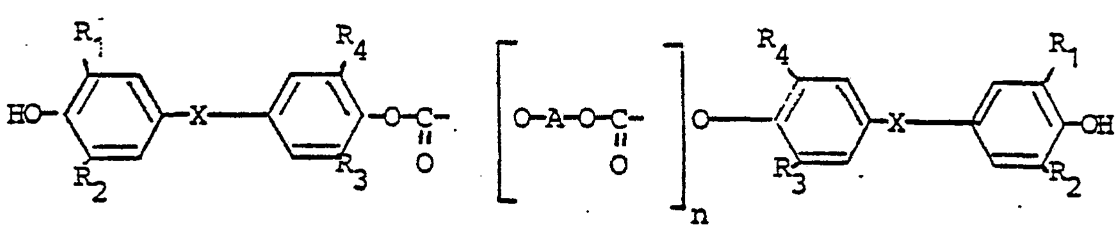

(III)

worin A, X, n und $R_1$ bis $R_4$ die für die Verbindungen der Formeln (III) und (IV) angegebene Bedeutung besitzen, mit Phosgen oder $COBr_2$ und gegebenenfalls mit anderen Diphenolen, insbesondere denen der Formel (IV), in einem Flüssigkeitsgemisch aus inerten organischen

Lösungsmitteln, insbesondere halogenierten Kohlenwasserstoffen, und alkalischer, wäßriger Lösung bei Temperaturen zwischen 0°C und 80°C, vorzugsweise zwischen 10°C und 40°C, bei einem pH-Wert zwischen 9 und 14 nach dem bekannten Phasengrenzflächenverfahren polykondensiert, wobei das Gewichtsverhältnis von heterocyclisch-aromatischen Oligocarbonaten zu anderem Diphenol von dem gewünschten heterocyclischen Polycarbonatanteil der hochmolekularen heterocyclisch-aromatischen Copolycarbonate bestimmt wird.

Gegenstand der vorliegenden Erfindung sind somit auch nach diesem erfindungsgemäßen Verfahren erhältliche hochmolekulare heterocyclisch-aromatische Copolycarbonate.

Die erfindungsgemäß insbesondere einzusetzenden Oligocarbonate der Formel (III) werden zur Umsetzung vorteilhaft in der organischen Phase gelöst. Bevorzugt einzusetzende Oligocarbonate sind solche der Formel (III), in denen $n < 40$ ist. Bei Oligocarbonaten mit $n > 40$ erfolgt die Umsetzung mit Phosgen zu hochmolekularen Polycarbonaten nur langsam. Sollen wunschgemäß weitere Diphenole der Formel (IV) zur Umsetzung gebracht werden, sind diese vorteilhafterweise in der alkalischen wäßrigen Phase zu lösen.

Als geeignete Lösungsmittel für die organische Phase des Phasengrenzflächenverfahrens seien beispielsweise halogenierte Aliphaten oder halogenierte Aromaten wie

$CH_2Cl_2$, 1,2-Dichlorethan, Chlorbenzol, Chlorbutane etc. genannt. Zur Herstellung der alkalischen wäßrigen Phase dient NaOH, KOH oder LiOH, vorzugsweise NaOH, wobei der pH-Wert während der Reaktion zwischen 9 und 14 liegt.

Als Katalysatoren für die Polykondensation dienen tertiäre aliphatische Amine, beispielsweise solche mit 3 bis 20 C-Atomen, wie Triethylamin, Tri-n-propyl-amin, Tri-n-butylamin, Dimethyl-benzylamin etc., quartäre aliphatische Ammoniumsalze, beispielsweise solche mit 4 bis 30 C-Atomen wie Tetramethylammoniumbromid, Tetraethylammoniumbromid, Tetramethylammoniumchlorid, Tetraethylammoniumchlorid, Trimethyl-benzylammoniumchlorid, Trimethyl-n-butyl-ammoniumchlorid, Tetra-n-butyl-ammoniumchlorid etc., sowie quartäre Phosphoniumsalze und quartäre Arsoniumsalze.

Als Kettenabbrecher fungieren in üblicher Weise Phenole wie beispielsweise Phenol selbst, Alkylphenole wie Kresole oder tert.-Butyl-phenole, insbesondere p-tert.-Butylphenol, sowie Halogenphenole wie p-Bromphenol, p-Chlorphenol, 2,4,6-Tribromphenol und 2,4,6-Trichlorphenol. Die Kettenabbrecher werden je nach gewünschtem Molekulargewicht der herzustellenden erfindungsgemäßen Copolycarbonate in Mengen zwischen 0,1 und 6 Mol-%, bezogen auf jeweils eingesetzte Mole an Oligocarbonaten beispielsweise der Formel (III) und gegebenenfalls zusätzlich verwendeten Diphenolen, beispielsweise denen der Formel (IV), eingesetzt.

Durch den Einbau geringer Mengen an tri- oder mehr als trifunktionellen Verbindungen, insbesondere solchen mit drei oder mehr als drei phenolischen Hydroxygruppen, vorzugsweise zwischen 0,05 - 2 Mol-% (bezogen auf die eingesetzten Diphenole), erhält man verzweigte Produkte mit besserem Fließverhalten bei der Verarbeitung.

Als tri- bzw. mehr als trifunktionelle Verbindung sind beispielsweise geeignet: Phloroglucin, 4,6-Dimethyl-2,4,6-tri-(3-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(3-hydroxyphenyl)-ethan, Tri-(4-hydroxyphenyl)-phenylmethan, 2,2-Bis-[4,4-(4,4'-dihydroxydiphenyl)-cyclohexyl]-propan, 2,4-Bis-(4-hydroxyphenyl-isopropyl)-phenol, 2,6-Bis-(2'-hydroxy-5'-methyl-benzyl)-4-methyl-phenol, 2,4-Dihydroxybenzoesäure, 2-(4-Hydroxyphenyl)-2-(2,4-dihydroxyphenyl)-propan, 1,4-Bis-(4',4"-dihydroxytriphenyl-methyl)-benzol und 3,3-Bis-(4-hydroxyphenyl)-2-oxo-2,3-dihydroindol sowie 3,3-Bis-(3-methyl-4-hydroxyphenyl)-2-oxo-2,3-dihydroindol.

Die Reaktionsdauer kann zwischen wenigen Minuten und einigen Stunden liegen und ist im allgemeinen nach 1 bis 2 Stunden abgeschlossen.

Die benötigte Menge an $COCl_2$ oder $COBr_2$ berechnet sich aus der Summe von OH-Endgruppen der Oligocarbonate, beispielsweise der Formel (III) und der gegebenenfalls mitverwendeten Diphenole beispielsweise der Formel (IV),

wobei jeweils ein Überschuß von etwa 10 Mol-% bis etwa 50 Mol-%, vorzugsweise von etwa 10 Mol-% bis etwa 30 Mol-% zu berücksichtigen ist.

Nach beendeter Reaktion wird die Polycarbonat-haltige organische Phase mit Wasser elektrolytfrei gewaschen und eingeengt. Die Isolierung der Produkte kann erfolgen, indem man die Copolycarbonate mit einem Nicht-Lösungsmittel, wie beispielsweise Aceton, Methanol oder Petrolether, ausfällt, absaugt und trocknet. Im allgemeinen werden jedoch bevorzugt die konzentrierten Polycarbonat-Lösungen in einen Schneckenverdampfer überführt und in bekannter Weise extrudiert.

Die Ausbeuten an erfindungsgemäßem Polycarbonat sind praktisch quantitativ. Der heterocyclische Polycarbonatanteil in den nach dem erfindungsgemäßen Verfahren hergestellten hochmolekularen heterocyclisch-aromatischen Copolycarbonaten liegt je nach gewünschtem Eigenschaftsbild, etwa zwischen 0,1 und 95, vorzugsweise etwa 50 und 95 Mol-%, wobei mit steigendem heterocyclischen Polycarbonatanteil die Schmelzviskosität und die Vicat-Temperatur zunimmt und die Reißdehnung abnimmt. Das Verhältnis von heterocyclischem zu aromatischem Polycarbonatanteil kann durch spektroskopische Methoden bestimmt werden. Besonders geeignet ist die NMR-Spektroskopie, bei der in einfacher Weise das Verhältnis aliphatischer Protonen der Diole I zu aromatischen Protonen der Diphenole IV ermittelt werden kann.

Die erfindungsgemäßen Copolycarbonate sollen mittlere Molekulargewichte $M_w$ (Gewichtsmittel) von 10 000 bis 200 000, vorzugsweise 20 000 bis 60 000 haben, ermittelt nach der Streulichtmethode. Die relativen Lösungsviskositäten $\eta_{rel}$ (gemessen an Lösungen von 0,5 g in 100 ml $CH_2Cl_2$ bei 25°C) liegen zwischen 1,1 und 2,0, vorzugsweise zwischen 1,2 und 1,6.

Die erfindungsgemäßen heterocyclisch-aromatischen Copolycarbonate zeichnen sich aus durch sehr gute mechanische, thermische und dielektrische Eigenschaften, sind klar transparent und beständig gegen viele chemische Agenzien. Ein Vorteil gegenüber rein aromatischen Polycarbonaten besteht in der verbesserten Kriechstromfestigkeit.

Zur weiteren Verbesserung der UV-Beständigkeit und Hydrolysestabilität können den erfindungsgemäßen Copolycarbonaten während oder nach ihrer Herstellung die für Polycarbonate üblichen Stabilisatoren, wie z.B. substituierte Benztriazole und Benzophenone, Phosphite oder Polycarbodiimide zugesetzt werden, in Mengen von 0,1 - 5 Gew.-%, bezogen auf das Gewicht der hochmolekularen heterocyclisch-aromatischen Copolycarbonate.

Werden flammwidrige Produkte gewünscht, können ca. 5 bis 15 Gew.-%, bezogen jeweils auf das Gewicht der hochmolekularen heterocyclisch-aromatischen Copolycarbonate, in der Chemie der thermoplastischen Polyester

und thermoplastischen Polycarbonate bekannten Flammschutzmittel, wie z.B. Antimontrioxid, Tetrabromphthalsäureanhydrid, Hexabromcyclododecan, Tetrachlor- oder Tetrabrombisphenol-A oder Tris-(2,3-dichlorpropyl)-phosphat zugemischt werden, wobei in den Polycarbonatanteilen der erfindungsgemäßen Polycarbonate statistisch eingebaute Tetrachlor- und Tetrabrombisphenole ebenfalls flammwidrige Eigenschaften zeigen.

Weiterhin können in der Chemie der thermoplastischen Polyester und thermoplastischen Polycarbonate bekannte Verarbeitungshilfsmittel, wie Trennhilfsmittel, in wirksamer Weise verwendet werden.

Zur Modifizierung der erfindungsgemäßen Produkte können Substanzen wie beispielsweise Ruß, Kieselgur, Kaolin, Tone, $CaF_2$, $CaCO_3$, Aluminiumoxide sowie übliche Glasfasern in Mengen von 2 bis 40 Gew.-%, bezogen jeweils auf das Gesamtgewicht der Formmasse und anorganische Pigmente sowohl als Füllstoffe als auch als Nucleierungsmittel zugesetzt werden.

Die erfindungsgemäßen heterocyclisch-aromatischen Polycarbonate finden spezielle Verwendung als Konstruktionswerkstoffe für verschiedene Anwendungszwecke, wie z.B. Maschinenteile, Automobilteile, Gehäuse, Gefäße und elektrische Teile. Sie können durch allgemeine Verformungsmethoden, z.B. durch Spritzgießen, Extrusionsverformen und Preßverformen verarbeitet werden. Weiterhin können aufgrund der guten Löslichkeit in Chlorkohlenwasserstoffen, z.B. Methylenchlorid, über das Gießverfahren Folien hergestellt werden, die sowohl als Elektroisolierfolien als auch als Trägerfolien verwendet werden können.

Den erfindungsgemäßen Polycarbonaten können außerdem andere Thermoplasten, wie etwa ABS, thermoplastische Polyester und insbesondere jedoch andere thermoplastische Polycarbonate auf Basis von Diphenolen in beliebigen Mengen zugemischt werden, vorzugsweise in Mengen bis zu etwa 50 Gew.-%, bezogen auf Gesamtgewicht aus erfindungsgemäßen Copolycarbonaten und anderen Thermoplasten, um das Eigenschaftsbild der erfindungsgemäßen Copolycarbonate noch zu modifizieren.

Vergleichsbeispiel 1

Hierzu wird das Beispiel 5 der GB-PS 1 079 686 nachgearbeitet. 14,6 g (0,1 Mol) 1,4;3,6-Dianhydro-D-glucit, Ia, 21,4 g (0,1 Mol) Diphenylcarbonat werden unter $N_2$ bei 220°C aufgeschmolzen. 18,8 g Phenol werden abdestilliert, anschließend wird noch 30 Min. bei 1 mm Hg nachgerührt.

Das erhaltene Polycarbonat ist blaßbraun und im wesentlichen transparent, enthält aber dunkelbraune Einschlüsse und läßt sich durch Druck mit den Händen auseinanderbrechen. Die Lösungsviskosität $\eta_{rel}$ (0,5 g in 100 ml $CH_2Cl_2$ bei 25°C) beträgt 1,186 (nach Abtrennen unlöslicher Bestandteile).

Vergleichsbeispiel 2

Das Vergleichsbeispiel 1 wird wiederholt, indem 14,6 g (0,1 Mol) 1,4;3,6-Dianhydro-D-mannit, Ib zur Reaktion gebracht werden. Nach wenigen Minuten, noch bevor die theoretisch berechnete Phenolmenge abdestilliert worden ist, setzt sich eine graubraune Masse ab, die nicht mehr aufgeschmolzen werden kann, ohne daß Zersetzung eintritt. Das Produkt ist intransparent, unlöslich in den meisten organischen Lösungsmitteln und außerordentlich spröde.

Durch die Vergleichsbeispiele 1 und 2 wird somit gezeigt, daß Homopolycarbonate aus den Furan-3,6-diolen I

als thermoplastische Werkstoffe nicht geeignet sind.

Vergleichsbeispiel 3

In 600 ml Wasser werden unter $N_2$ gelöst:

20,0 g (0,5 Mol) NaOH, 22,8 g (0,1 Mol) Bisphenol A, 14,6 g (0,1 Mol) 1,4;3,6-Dianhydro-D-glucit. Nach Zugabe von 600 ml $CH_2Cl_2$ werden unter intensivem Rühren 30 g (0,3 Mol) Phosgen eingeleitet. Die wäßrige Phase ist bisphenolatfrei. Es werden 3 ml einer 3 %igen Triethylamin-Lösung zugegeben und 60 Min. nachgerührt. Die organische Phase wird abgetrennt, mit 100 ml 5 %iger Phosphorsäure geschüttelt und mit destilliertem Wasser elektrolytfrei gewaschen. Die Lösung wird eingedampft. Man erhält 23 g farbloses Polycarbonat mit $\eta_{rel}$ = 1,19. Durch IR- und NMR-spektroskopische Untersuchungen wird jedoch gefunden, daß es sich um reines Bisphenol A-Polycarbonat handelt.

Durch Vergleichsbeispiel 3 wird somit gezeigt, daß Copolycarbonate aus den heterocyclischen Diolen I und aromatischen Bisphenolen nach dem Verfahren der Zweiphasengrenzflächenphosgenierung nicht hergestellt werden können.

Beispiel 1

a) Herstellung eines heterocyclisch-aromatischen Oligocarbonats mit Diphenolcarbonat-Endgruppen mit $\bar{M}_n$ = 2200

In einem 20-l-Kessel, der mit Rührer, Kontaktthermometer, Füllkörperkolonne und Destillationsbrücke ausgestattet ist, werden 2920 g (20 Mol) 1,4;3,6-Dianhydro-D-glucit (Formel Ia), 4708 g (22 Mol) Diphenylcarbonat, 912 g (4 Mol) 2,2-Bis-(4-hydroxyphenyl)-propan (Bisphenol A) eingetragen. Als Katalysator wird 0,4 g Dinatriumsalz von Bisphenol A zugesetzt. Zur Entfernung des Sauerstoffs wird die Apparatur wiederholt evakuiert und danach mit Stickstoff der Druck ausgeglichen. Dann wird ein Vakuum von 100 Torr angelegt und unter Rühren auf 180°C aufgeheizt. Nach 90 Minuten wird auf 200°C aufgeheizt, nach weiteren 90 Minuten wird der Druck auf 15 Torr vermindert. Dabei destillieren 3950 g (95,5 % d. Th.) Phenol ab. Anschließend wird noch eine Stunde bei 220°C und 0,9 Torr nachgerührt, wobei sich die Gesamtmenge des abdestillierten Phenols auf 4127 g (99,8 % d.Th.) erhöht. Das Vakuum wird mit Stickstoff aufgehoben. Durch das Bodenablaßventil des Rührkessels wird das Produkt abgelassen. Es erstarrt unterhalb 160°C zu einem gelblichen, glasklaren, spröden Harz. Die OH-Zahl beträgt 52 (berechnet: 51).

b) Herstellung eines hochmolekularen heterocyclisch-aromatischen Copolycarbonates aus 83,3 Mol-% 1,4;3,6-Dianhydro-D-glucit und 16,7 Mol-% Bisphenol A

3300 g (1,5 Mol) des oben beschriebenen Oligocarbonates werden in 32 l $CH_2Cl_2$ gelöst. 712 g 45 proz. NaOH und 30 l destilliertes Wasser werden zugegeben. Als Kettenbegrenzer werden 4,5 g (0,03 Mol) p-tert.-Butylphenol zugesetzt. Unter Rühren und Stickstoffatmosphäre werden bei 20 bis 25°C innerhalb von 30 Minuten 297 g (3 Mol) Phosgen eingeleitet. Während des Einleitens wird durch gleichzeitiges Zutropfen von NaOH der pH-Wert konstant bei 13 gehalten. Nach beendeter Phosgeneinleitung wird eine Lösung von 5 g Triethylbenzylammoniumchlorid in 50 ml $H_2O$ zugesetzt und 60 Minuten nachgerührt.

Die organische Phase wird abgetrennt, mit 2 proz. Phosphorsäure und dann mit destilliertem Wasser bis zur Elektrolytfreiheit gewaschen. Die organische Lösung wird konzentriert. Durch Extrusion im Eindampfextruder bei etwa 250 - 270°C wird ein klares, gelbliches Granulat mit $\eta_{rel}$ = 1,25 erhalten.

<u>Beispiel 2</u>

a) Herstellung eines heterocyclisch-aromatischen Oligocarbonates mit Diphenolcarbonat-Endgruppen mit $\bar{M}_n$ = 654

Wie im Beispiel 1a) werden 1460 g (10 Mol) 1,4;3,6-Dianhydro-D-glucit (Formel Ia), 4560 g (20 Mol) 2,2-Bis-4-hydroxyphenyl)-propan und 4280 g (20 Mol) Diphenylcarbonat unter Verwendung von 50 mg KOH umgesetzt. Dabei wird zunächst bei 100 Torr 90 Minuten bei 180°C und danach 60 Minuten bei 200°C gehalten. Nach einer weiteren Stunde bei 20 Torr und 220°C wird noch eine Stunde bei 0,6 Torr und 220°C nachgerührt. Die Destillatmenge beträgt 3762 g (100 % d. Th.). Das erhaltene Produkt erstarrt unterhalb 105°C zu einem klaren, nahezu farblosen, spröden Harz.
Die OH-Zahl beträgt 170 (th: 171,2).

b) Herstellung eines hochmolekularen heterocyclisch-aromatischen Copolycarbonates aus 33,3 Mol-% 1,4;3,6-Dianhydro-D-glucit und 66,7 Mol-% Bisphenol A

4905 g (7,5 Mol) des oben beschriebenen Oligocarbonates werden in 40 l $CH_2Cl_2$ gelöst. 3340 g 45 proz. NaOH und 40 l destilliertes Wasser, 22,5 g (0,15 Mol) p-tert.-Butylphenol und 8 g (0,025 Mol) Tetrabutylammoniumbromid werden zugegeben. Unter Rühren und Stickstoffatmosphäre werden bei 15 bis 20°C innerhalb von 60 Minuten 1114 g (11,25 Mol) Phosgen eingleitet. Nach beendeter Phosgeneinleitung werden 8 ml Triethylamin zugesetzt und 60 Minuten nachgerührt. Anschließend wird wie im Beispiel 1b aufgearbeitet. Das hochmolekulare Copolycarbonat besitzt eine $\eta_{rel}$ = 1,30.
An Normkleinstäben werden folgende Werte gemessen:

Vicat B: 147°
Die Kriechstromfestigkeit, gemessen nach dem KC-Verfahren (Prüflösung F) beträgt 600 V (z. Vergl.: reines Bisphenol A-Polycarbonat: 250 V).

Beispiel 3

Herstellung eines hochmolekularen heterocyclisch-aromatischen Copolycarbonates aus 60 Mol-% 1,4;3,6-Dianhydro-D-glucit und 40 Mol-% Bisphenol A

3300 g (1,5 Mol) des Oligocarbonates aus Beispiel 1a) werden in 40 l $CH_2Cl_2$ gelöst. 3780 g 45 proz. NaOH, 1596 g (7 Mol) Bisphenol A, 40 l destilliertes Wasser, 12,75 g (0,085 Mol) p-tert.-Butylphenol und 16,1 g (0,05 Mol) Tetrabutylammoniumbromid werden zugegeben. Unter Rühren und Stickstoffatmosphäre werden bei 20 bis 25°C innerhalb von 60 Minuten 1262 g (12,75 Mol) Phosgen eingeleitet. Nach beendeter Phosgeneinleitung werden 9 ml Triethylamin zugesetzt und 60 Minuten nachgerührt. Anschließend wird wie im Beispiel 1b) aufgearbeitet. Das hochmolekulare Copolycarbonat besitzt eine $\eta_{rel}$ = 1,27. An Normkleinstäben werden folgende Werte gemessen:

| | |
|---|---|
| Vicat B: | 148°C |
| Schlagzähigkeit: | nicht gebrochen |
| Streckspannung: | 78,6 MPa |
| Reißfestigkeit: | 60,3 MPa |
| Reißdehnung: | 17,1 % |
| Kriechstromfestigkeit: | >600 V |

Beispiel 4

Herstellung eines hochmolekularen, heterocyclisch-aromatischen Copolycarbonates aus 10 Mol-% 1,4;3,6-Dianhydro-D-glucit und 90 Mol-% Bisphenol A

550 g (0,5 Mol) des Oligocarbonates aus Beispiel 1a) werden in 40 l $CH_2Cl_2$ gelöst. 8890 g 45 proz. NaOH, 5016 g (22 Mol) Bisphenol A, 40 l destilliertes Wasser und 112,5 g (0,75 Mol) p-tert.-Butylphenol werden zugegeben. Unter Rühren und Stickstoffatmosphäre werden bei 20 - 25°C innerhalb von 90 Minuten 2970 g (30 Mol) Phosgen eingleitet. Nach beendeter Phosgeneinleitung werden 20 ml Triethylamin zugesetzt und 60 Minuten nachgerührt. Anschließend wird wie im Beispiel 1 b aufgearbeitet. Das hochmolekulare Copolycarbonat besitzt eine $\eta_{rel}$ = 1,27.

An Normkleinstäben werden folgende Werte gemessen:
Vicat B: 146°  Kerbschlagzähigkeit: 20 kJ/$m^2$

Beispiele 5 - 11

In den Beispielen 5a - 11a wird die Herstellung weiterer Oligocarbonate beschrieben. Die Reaktionsbedingungen während der Kondensation sind dabei die gleichen wie in Beispiel 1 a. Einzelheiten sind in Tabelle 1 zusammengestellt (s. Seite 32).

In den Beispielen 5b - 11b wird die Herstellung von

weiteren hochmolekularen heterocyclisch-aromatischen Copolycarbonaten aus den vorstehend aufgeführten Oligocarbonaten beschrieben.

Tabelle I

| Beispiel | Mol | Diol | Mol | Diphenol | Mol Diphenylcarbonat | Gew.%* | Katalysator | Erweichungsbereich | OH-Zahl gef. | OH-Zahl ber. | $M_n$ |
|---|---|---|---|---|---|---|---|---|---|---|---|
| 5a | 4 | Ia | 2 | BisphenolA | 5 | 0,05 | $Sb_2O_3$ | 115-125°C | 97 | 95,8 | 1168 |
| 6a | 18 | Ia | 2 | " | 19 | 0,01 | Butyltitanat | 155-165°C | 33 | 31,4 | 3576 |
| 7a | 38 | Ia | 2 | " | 39 | 0,005 | Ca-acetat | 195-210°C | 18 | 16 | 7016 |
| 8a | 4 | Ia | 2 | 1,1-Bis-(4-hydroxy-phenyl)-cyclohexan | 5 | 0,0025 | Na-phenolat | 127-145°C | 91 | 89,6 | 1250 |
| 9a | 4 | Ia | 2 | Bis-(4-hydroxy-phenyl)-sulfid | 5 | 0,0025 | " | 115-120°C | 99 | 97,6 | 1148 |
| 10a | 4 | Ia | 2 | Dihydroxydiphenyl | 5 | 0,005 | Dibutylzinn-oxid | 130-135°C | 103 | 103 | 1086 |
| 11a | 4 | Ib | 4 | Bisphenol A | 6 | 0,005 | Dinatrium-bisphenolat | 120-130°C | 139 | 136 | 824 |

*bezogen auf das Gesamtgewicht des eingesetzten Reaktionsgemisches

Die in Tabelle 2 angegebene Menge des entsprechenden Oligocarbonates 5a - 11a wird in 3 l $CH_2Cl_2$ gelöst. 40 g NaOH, 3 l destilliertes Wasser und 300 mg p-tert.-Butylphenol werden zugegeben. Unter Rühren und Stickstoffatmosphäre werden bei 20°C innerhalb von 30 Minuten 20 g Phosgen eingeleitet. Nach beendeter Phosgeneinleitung wird 1 ml Triethylamin zugesetzt und 60 Minuten nachgerührt. Die organische Phase wird abgetrennt, mit zweiproz. Phosphorsäure und dann mit destilliertem Wasser bis zur Elektrolytfreiheit gewaschen. Die organische Lösung wird konzentriert und im Vakuumtrockenschrank von restlichem Lösungsmittel befreit. Die erhaltenen Produkte sind nahezu farblos, klar transparent und von hoher mechanischer Festigkeit. Weitere Einzelheiten sind in Tabelle 2 angegeben.

Tabelle 2

| Beispiel | eingesetzt g | Oligocarbonat | $\eta_{rel}$ | Copolycarbonat Mol-% | Diol* |
|---|---|---|---|---|---|
| 5b | 116,8 | 5a | 1,369 | 66,7 | Ia |
| 6b | 357,6 | 6a | 1,372 | 90 | Ia |
| 7b | 701,6 | 7a | 1,224 | 95 | Ia |
| 8b | 125,0 | 8a | 1,261 | 66,7 | Ia |
| 9b | 114,8 | 9a | 1,320 | 66,7 | Ia |
| 10b | 108,6 | 10a | 1,282 | 66,7 | Ia |
| 11b | 82,4 | 11a | 1,215 | 50 | Ib |

*bezogen auf Gesamtmolmenge an heterocyclischem Diol und aromatischem Diphenol

Patentansprüche

1. Verfahren zur Herstellung von heterocyclisch-aromatischen Oligocarbonaten mit Diphenolcarbonat-Endgruppen, dadurch gekennzeichnet, daß heterocyclische Diole der Formel (I)

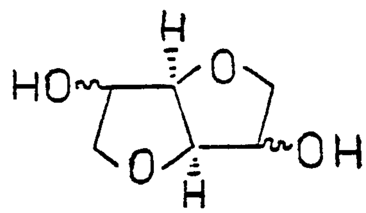

(I)

Kohlensäurebisarylester und Diphenole gemeinsam, gegebenenfalls unter Mitverwendung von Katalysatoren, bei Temperaturen zwischen 100 und 280°C und im Vakuum zwischen 200 und 0,1 Torr umgesetzt werden, wobei zur Herstellung von 1 Mol des heterocyclisch-aromatischen Oligocarbonats n Mol Diol I, m Mol Diphenol und p Mol Kohlensäurebisarylester eingesetzt werden, wobei n eine Zahl von 1 bis 80 ist und wobei m eine beliebige Zahl zwischen 2 und 5 und p mindestens n + 1, höchstens aber (n + m)-1, ist.

2. Heterocyclisch-aromatische Oligocarbonate mit Diphenolcarbonat-Endgruppen erhalten gemäß Verfahren des Anspruchs 1.

3. Heterocyclisch-aromatische Oligocarbonate mit Diphenolcarbonat-Endgruppen der idealisierten Formel (III)

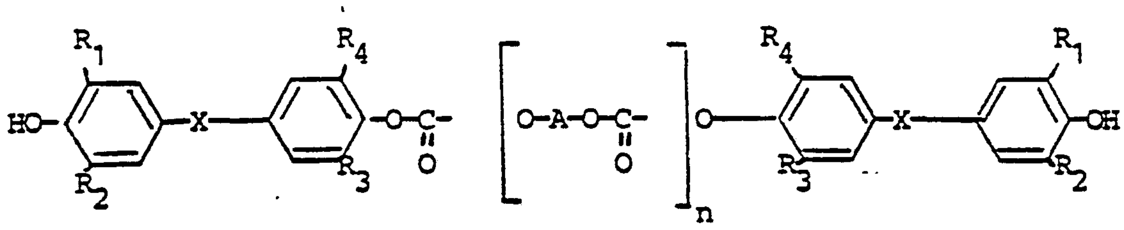

(III)

worin
A der bivalente Rest eines heterocyclischen Diols der Formel (I) ist,

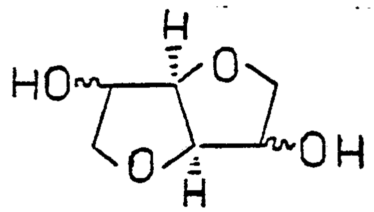

(I)

n eine Zahl von 1 bis 80 bedeutet,
und die Endgruppen aus den Diphenolen der Formel (IV) resultieren,

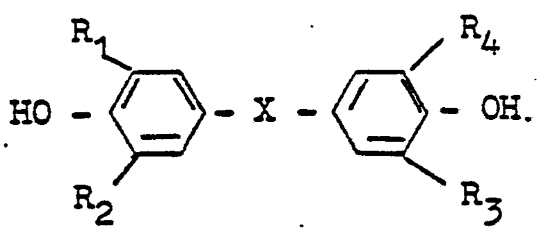

(IV)

worin

X $C_1$-$C_6$-Alkylen, $C_2$-$C_6$-Alkyliden, $C_6$-$C_{10}$-Cycloalkylen, $C_6$-$C_{10}$-Cycloalkyliden, $-\underset{|}{C}H-Aryl$ wie $-\underset{|}{C}H-C_6H_5$, $-\underset{|}{C}(Aryl)_2$ wie $-\underset{|}{C}(C_6H_5)_2$, $-\underset{O}{\underset{\|}{C}}-$, -S-, -SO-, $-SO_2-$, -O-, eine direkte Bindung und

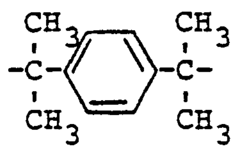,

$R_1$ bis $R_4$ gleich oder verschieden sind und H, $CH_3$, $C_2H_5$, $O-CH_3$, Cl oder Br bedeuten,

erhalten gemäß Verfahren des Anspruchs 1.

4. Heterocyclisch-aromatische Oligocarbonate mit Diphenolcarbonat-Endgruppen gemäß Anspruch 3, worin A die Formel (Ia) bedeutet, und n zwischen 2 und 40 liegt.

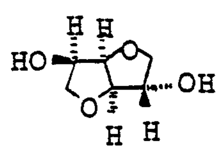

(Ia)

5. Verwendung der heterocyclisch-aromatischen Oligocarbonate mit Diphenolcarbonat-Endgruppen der Ansprüche 2 bis 4 zur Herstellung von hochmolekularen heterocyclisch-aromatischen Copolycarbonaten.

6. Verfahren zur Herstellung von hochmolekularen heterocyclisch-aromatischen Copolycarbonaten, dadurch gekennzeichnet, daß man heterocyclisch-aromatische Oligocarbonate mit Diphenolcarbonat-Endgruppen der Ansprüche 2 bis 4 mit Phosgen oder $COBr_2$, und gegebenenfalls mit anderen Diphenolen, in einem Flüssigkeitsgemisch aus inerten organischen Lösungsmitteln und alkalischer wäßriger Lösung bei Temperaturen zwischen 0°C und 80°C, bei einem pH-Wert zwischen 9 und 14 nach dem bekannten Phasengrenzflächenverfahren polykondensiert, wobei das Gewichtsverhältnis von heterocyclisch-aromatischen Oligocarbonaten zu anderem Diphenol von dem gewünschten heterocyclischen Polycarbonatanteil der hochmolekularen heterocyclisch-aromatischen Copolycarbonate bestimmt wird.

7. Verfahren gemäß Anspruch 6, dadurch gekennzeichnet, daß als andere Diphenole solche der Formel (IV)

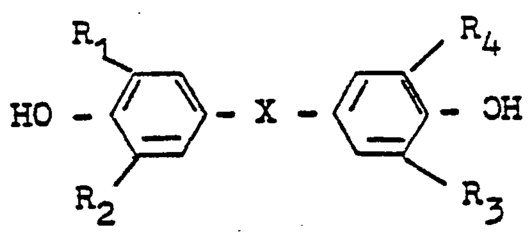

(IV)

umgesetzt werden, worin
X und $R_1$ bis $R_4$ die für Formel (IV) in Anspruch 3 genannte Bedeutung haben.

8. Hochmolekulare, thermoplastische heterocyclisch-aromatische Copolycarbonate mit einem Gehalt von

0,1 - 95 Mol-%, bezogen auf Gesamtmolmenge an Carbonatstruktureinheiten im Polycarbonatmolekül, Carbonatstruktureinheiten aus Hexahydro-furo-(3,2-b)-furan-3,6-diolen gemäß Formel (II)

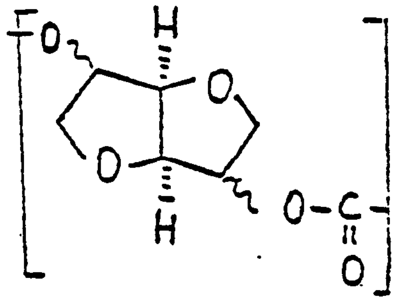

(II)

erhalten gemäß Ansprüchen 6 und 7.

9. Abmischungen aus Copolycarbonaten des Anspruches 8 mit anderen Thermoplasten.